# EUROPÄISCHE PATENTSCHRIFT

(11) **EP 3 314 103 B1**
(45) Veröffentlichungstag und Bekanntmachung des Hinweises auf die Patenterteilung: **02.10.2019**
(21) Anmeldenummer: 16725541.3
(22) Anmeldetag: 30.05.2016
(51) Int. Cl.: F01N 3/20

(54) **EINSPRITZVORRICHTUNG FÜR EIN FLÜSSIGES REDUKTIONSMITTEL**
INJECTION DEVICE FOR A LIQUID REDUCING AGENT
DISPOSITIF D'INJECTION POUR UN AGENT REDUCTEUR LIQUIDE

(30) Priorität: 24.06.2015 DE 102015211749
(43) Veröffentlichungstag der Anmeldung: 02.05.2018
(73) Patentinhaber: Robert Bosch GmbH, 70442 Stuttgart (DE)
(72) Erfinder: HAEBERER, Rainer, 75015 Bretten (DE)
(86) Internationale Anmeldenummer: PCT/EP2016/062103
(87) Internationale Veröffentlichungsnummer: WO 2016/206914

(56) Entgegenhaltungen:
- WO-A1-88/09867
- DE-A1- 19 528 807
- DE-A1-102010 028 863
- JP-A- 2009 052 509

## Beschreibung

### Stand der Technik

Die Erfindung geht aus von einer Einspritzvorrichtung nach der Gattung des unabhängigen Anspruchs. Es sind schon derartige Einspritzvorrichtungen aus der DE 10 2013 211 668 und der DE 195 28 807 bekannt, welche als Pumpe-Düse-Einheiten ausgebildet sind.

Bei Kraftwagen mit Verbrennungsmotor muß aufgrund verschärfter Abgasgesetzgebung unter anderem der Ansteil des Schadstoffs Stickoxid am Abgas reduziert werden. Eine Methode, die hierbei zur Anwendung kommt, ist das Verfahren der selektiven katalytischen Reduktion, das sogenannte SCR-Verfahren ("SCR" = engl. "selective catalytic reduction"), bei dem Stickoxide unter Zuhilfenahme beispielsweise eines flüssigen Reduktionsmittels, insbesondere einer wässrigen Harnstofflösung, zu Stickstoff und Wasser reduziert werden. Das Reduktionsmittel wird dabei von einer Vorrichtung, die beispielsweise auf einem Pumpe-Düse-Prinzip beruht, von einem Vorratstank angesaugt und dem Abgas stromaufwärts eines geeigneten Katalysators als feiner Spray zugeführt. Bei einer zum Beispiel bis zu fünf Meter langen Ansaugleitung und der am Abgasrohr herrschenden hohen Temperatur ist es zweckmäßig, mit einer zusätzlich am Tank positionierten Förderpumpe die Flüssigkeit stromaufwärts der Pumpe-Düse unter einen Druck von beispielsweise 2 bis 3 bar zu setzen und so der am Abgasrohr positionierten Pumpe-Düse-Einheit zuzuleiten und eine mengengenaue Dosierung zu ermöglichen. Ohne Vorförderpumpe gäbe es aufgrund einer langen Leitung und einem der Pumpe-Düse vorgelagerten, also saugseitigen Filter hohe Drosselverluste. Verbunden mit hohen Temperaturen im Bereich der Pumpe-Düse läge der Siedepunkt des Reduktionsmittels im Niederdruckbereich der Pumpe-Düse bei etwa 70 Grad Celsius, und es wäre aufgrund siedenden Reduktionsmittels keine sichere Dosierung möglich.

Eine Anordnung mit Vorförderpumpe ist beispielsweise aus der DE 10 2013 211 668 bekannt. Die Pumpe-Düse weist hier einen Kolben auf, der zunächst infolge einer Ansteuerung über einen Elektromagneten das Reduktionsmittel verdichtet und dann als Spray dem Abgas zuführt. Anschließend wird der Kolben über eine Federkraft wieder zurückbewegt, wodurch sich das Volumen im Verdichtungsraum zwischen Kolben und Düse wieder mit Flüssigkeit füllen kann. Dies geschieht bei der DE 10 2013 211 668 über eine am Kolben vorgenommene technische Maßnahme, insbesondere in Form einer Längsbohrung im Kolbeninneren, die bei zurückbewegtem Kolben den Verdichtungsraum mit einer Reduktionsmittelzufuhr verbindet.

Weiterhin ist es aus der EP 1 878 920 bekannt, eine Dosierpumpe abgastraktnah anzuordnen. Hier wird eine Pumpkammer über ein Schlitzventil befüllt.

Weiterhin ist aus der WO 88/09867 ein Rückschlagventil bekannt, welches ein elastisches Schließelement aufweist.

### Offenbarung der Erfindung

Die erfindungsgemäße Einspritzvorrichtung mit den kennzeichnenden Merkmalen des unabhängigen Anspruchs hat demgegenüber den Vorteil, eine mengengenaue und sichere Dosierung durch eine abgastraktnah pumpende Einspritzvorrichtung zu gewährleisten, ohne weitere Pumpenmittel vorsehen zu müssen.

Durch die in den abhängigen Ansprüchen aufgeführten Maßnahmen sind vorteilhafte Weiterbildungen und Verbesserungen des im unabhängigen Anspruch angegebenen möglich.

Erfindungsgemäss ist ein Rückschlagventil mit einem elastischen Element ausgebildet, so daß es eine Funktion als Druckspeicher übernehmen kann.

Es ist vorteilhaft, in einem Anker Bohrungen auszubilden, welche einen raschen Fluidaustausch innerhalb der Pumpanordnung ermöglichen, so daß eine Schaumbildung des Fluids erschwert wird.

### Kurze Beschreibung der Zeichnungen

Ausführungsbeispiele der Erfindung sind in der Zeichnung dargestellt und in der nachfolgenden Beschreibung näher erläutert.

Es zeigen
- Figur 1: eine als Pumpe-Düse-Einheit ausgebildete Einspritzvorrichtung und
- Figur 2: ein Rückschlagventil einer Pumpe-Düse-Einheit.

### Ausführungsformen der Erfindung

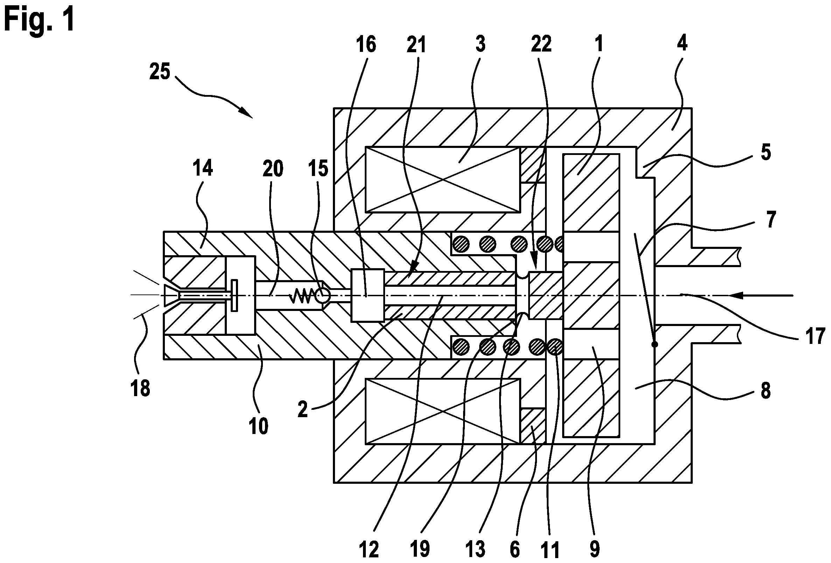

Figur 1 zeigt eine an einem Abgasstrang einer Brennkraftmaschine anordenbare Pumpe-Düse-Einheit 25 zur dosierten Einspritzung eines Reduktionsmittels, beispielsweise einer wässrigen Harnstofflösung, um im Abgas enthaltene Stickoxide zu reduzieren. Das Gehäuse 4 beherbergt eine Magnetspule 3 zur elektrisch angesteuerten Bewegung eines mit einem Anker 1 verbundenen Kolbens 2. Der Kolben 2 weist einen einem Verdichtungsraum 16 zugewandten, verdichtungsraumseitigen Bereich 21 und einen vom Verdichtungsraum abgewandten, ankerseitigen Bereich 22 auf und kann sich in einer mit dem Gehäuse verbundenen Hülse 10 bewegen, bei stromloser Magnetspule 3 drückt eine zwischen Hülse 10 und Anker 1 gespannte Feder 11 den Anker 1 gegen einen Aufschlagsockel 5 des Gehäuses 4. Die Magnetspule 3 ist gegenüber dem fluidführenden Raum 8, in dem sich der Anker 1 bewegen kann und der mit dem Pumpeneingang 17 in fluidführender Verbindung steht, fluiddicht mittels einer Abdichtung 6 abgedichtet. Zwischen Pumpeneingang 17, über den die Pumpe-Düse-Einheit Fluid bzw. flüssiges Reduktionsmittel aus einem Vorratstank ansaugen kann, und dem Raum 8 ist ein Rückschlagventil 7 angeordnet. Dieses Rückschlagventil kann ein ganz einfaches Schirmventil sein, das bereits bei sehr kleinen Druckunterschieden öffnet. Der Anker 1 weist Bohrungen 9 auf, welche einen zügigen Fluidaustausch zwischen der dem Rückschlagventil 7 zugewandten Seite und der der Hülse 10 zugewandten Seite des Ankers ermöglichen. Der Raum 8 wiederum steht in stromlosem Zustand der Magnetspule 3 über eine Nut 13 am Kolben und mindestens eine randständige Kolbenaussparung 12 mit einem auf der dem Anker 1 abgewandten Seite des Kolbens 2 befindlichen Verdichtungsraum 16 in Fluidverbindung. Erfindungsgemäss ist auf der dem Kolben 2 abgewandten Seite der Verdichtungsraum 16 von einem passiven Düsenventil 15 begrenzt, welches ab einem hinreichend hohen Fluiddruck im Verdichtungsraum 16 öffnet und angestautes Fluid in den nachfolgend angeordneten Expansionsraum 20 entweichen läßt. Der Expansionsraum 20 ist auf der einer nicht näher dargestellten Abgasleitung zugewandten Seite der Hülse 10 von einem Zerstäubungselement 14 begrenzt, welches aus dem Expansionsraum 20 stammendes, unter Druck stehendes Fluid zerstäubend in Form eines Einspritzstrahls 18 in die Abgasleitung entläßt. Das Zerstäubungselement kann zum Beispiel ein nach außen öffnendes passives Ventil sein.

Die Flüssigkeit bzw. das Fluid fließt über den Pumpeneingang 17 in die Pumpe-Düse-Einheit 25. Angesaugt wird sie in den Verdichtungsraum 16 hinein durch einen sich im Verdichtungsraum 16 ausbildenden Unterdruck, wenn der Kolben 2 insbesondere im stromlosen Zustand der Magnetspule 3 sich in Richtung Pumpeneingang 17 bewegt. Dabei gelangt die Füssigkeit über die Nut 13 und die mindestens eine randständige Kolbenbohrung 12 in den Verdichtungsraum 16. Wird die Magnetspule 3 elektrisch bestromt, wird der Anker 1 von der Magnetspule angezogen und der Anker entfernt sich vom Pumpeneingang. Sobald die Hülsenkante 19 die Nut 13 verschlossen hat, beginnt der Kolben über den Pumpeneingang 17 aus einem nicht näher dargestellten Vorratstank Flüssigkeit in den Raum 8 hinein anzusaugen.

Die Magnetspule 3 der Pumpe-Düse-Einheit 25 wird mit einer Schaltfrequenz in einem Bereich von 20-100 Hz sehr schnell geschaltet, um schnell eine ausreichende Pumpwirkung zu erzielen, bis der zum Einspritzen in den Abgastrakt erforderliche Druck aufgebaut ist und das Düsenventil 15 öffnet. Der sich sehr schnell oszillierend bewegende Anker 1 wird im Raum 8 sehr hohe Turbulenzen, sprich Unterdrücke bzw. Schaum erzeugen. Um diesem Effekt zu begegnen, der eine ordnungsgemäße Befüllung des Verdichtungsraums 16 erschweren würde, stellen die Bohrungen 9 in der Ankerplatte 1 Fluidpfade bereit, über die die Flüssigkeit ohne größere Umlenkungen zum durch das Zusammenwirken von Nut 13 und Hülsenkante 19 gebildeten Steuerschlitz gelangen kann. Ein weiterer Gesichtspunkt beim Strömungsverhalten des Reduktionsmittels im Raum 8 ist folgender: Wenn sich der Kolben aufgrund der Kraft der sich entspannenden Feder 11 in Richtung Pumpeneingang 17 bewegt, würde er, solange der durch das Zusammenwirken von Nut 13 und Hülsenkante 19 gebildete Steuerschlitz bzw. Schlitzsteuerung noch geschlossen ist, die im Raum 8 vorliegende Flüssigkeit teilweise zurück in Richtung Tank schieben, wenn das Rückschlagventil 7 nicht vorhanden wäre, welches in diesem Moment schließt. Öffnet die Schlitzsteuerung, so wird die gesamte Flüssigkeitssäule in ihrer Bewegungsrichtung wieder umgepolt und muß nunmehr den Verdichtungsraum 16 befüllen. Das Rückschlagventil 7 ist also während der Verdichtungsphase des Kolbens offen, d.h. der Raum 8 wird befüllt. Sobald der Kolben 2 sich auf den Pumpeneingang 17 zubewegt, schließt das Ventil 7, wodurch sich im Raum 8 eine Druckerhöhung einstellt. Öffnet nun die Schlitzsteuerung (13, 19), so steht genügend Flüssigkeit zur Verfügung, die den Raum 16 wieder befüllen kann. Zur Erzeugung eines effizienten Überdrucks ist es vorteilhaft, wenn das Volumen 8 möglichst klein, jedoch größer als die einzuspritzende Menge, d.h. Verdichtungsvolumen 16 ist.

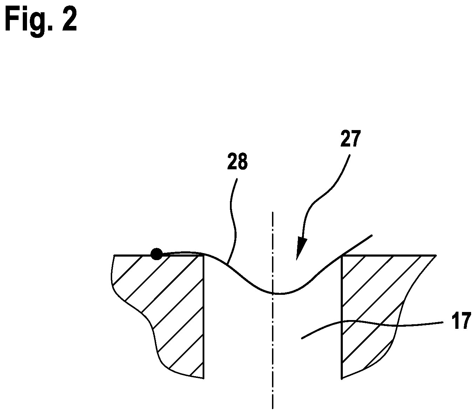

Figur 2 zeigt ein Rückschlagventil 7 am Pumpeneingang in Form eines Schirmventils 27, welches erfindungsgemäss ein elastisches Schließelement 28 aufweist. Das elastische Schließelement verformt sich im hier dargestellten geschlossenen Zustand des Ventils unter Druck in die Saugbohrung des Pumpeneingangs 17 hinein, erzeugt somit eine Vorspannung im Raum 8 und hat gleichsam die Funktion eines durch den Fluiddruck vorgespannten Speichers.

## Patentansprüche

1. Einspritzvorrichtung (25) zum Einspritzen eines Reduktionsmittels in einen Abgasstrang einer Brennkraftmaschine, mit einem Verdichtungsraum (16), dessen Volumen durch Bewegen eines Kolbens (2), der einen dem Verdichtungsraum (16) zugewandten, verdichtungsraumseitigen Bereich (21) und einen vom Verdichtungsraum abgewandten, ankerseitigen Bereich (22) hat, variierbar ist, und einem Einlaßventil (13, 19), das wenigstens eine offene Position, in der es eine Fluidverbindung zwischen dem Verdichtungsraum (16) und einer externen, an einem Fluideingang (17) der Einspritzvorrichtung anschließbaren Fluidquelle schafft, und wenigstens eine geschlossene Position, in der es die Fluidverbindung zwischen dem Verdichtungsraum (16) und der externen Fluidquelle trennt, wobei zwischen dem Fluideingang (17) und dem ankerseitigen Bereich (22) ein Rückschlagventil (7) angeordnet ist, **dadurch gekennzeichnet, dass** das Rückschlagventil (7) ein elastisches Schließelement (28) aufweist, welches eingerichtet ist, beim Verschließen des Fluideingangs (17) infolge eines Fluiddrucks elastisch verformt zu werden; und dass auf der dem Kolben (2) abgewandten Seite der Verdichtungsraum (16) von einem passiven Düsenventil (15) begrenzt ist, welches ab einem hinreichend hohen Fluiddruck im Verdichtungsraum (16) öffnet und angestautes Fluid in einen nachfolgend angeordneten Expansionsraum (20) entweichen läßt.

2. Einspritzvorrichtung nach Anspruch 1, **dadurch gekennzeichnet, daß** das Rückschlagventil (7) eingerichtet ist zum Öffnen und Verschließen des Fluideingangs.

3. Einspritzvorrichtung nach Anspruch 1 oder 2, **dadurch gekennzeichnet, daß** das Rückschlagventil als Schirmventil (27) ausgebildet ist.

4. Einspritzvorrichtung nach einem der vorhergehenden Ansprüche, **dadurch gekennzeichnet, daß** an dem Kolben (2) eine Fluidverbindung (12) zwischen dem Verdichtungsraum und dem Einlaßventil (13, 19) ausgebildet ist.

5. Einspritzvorrichtung nach Anspruch 4, **dadurch gekennzeichnet, daß** die Fluidverbindung durch eine randständige Kolbenaussparung (12) oder durch eine Kolbenbohrung gebildet ist.

6. Einspritzvorrichtung nach einem der vorhergehenden Ansprüche, **dadurch gekennzeichnet, daß** das Einlaßventil (13, 19) durch das Zusammenwirken eines Bereichs (19) der Einspritzvorrichtung mit dem ankerseitigen Bereich (22) des Kolbens ausgebildet ist.

7. Einspritzvorrichtung nach Anspruch 6, **dadurch gekennzeichnet, daß** der Bereich (19) als Kante ausgebildet ist und daß die Kante mit einer Nut (13) im ankerseitigen Bereich (22) des Kolbens wechselwirkt.

8. Einspritzvorrichtung nach einem der vorhergehenden Ansprüche, **dadurch gekennzeichnet, daß** am ankerseitigen Bereich (22) des Kolbens ein Anker (1), insbesondere eine Ankerplatte, ausgebildet ist.

9. Einspritzvorrichtung nach Anspruch 8, **dadurch gekennzeichnet, daß** der Anker (1) mindestens eine Bohrung (9) aufweist, welche einen direkten Fluidaustausch zwischen Fluideingang (17) und Einlaßventil (13, 19) ermöglicht.

10. Einspritzvorrichtung nach Anspruch 8 oder 9, **dadurch gekennzeichnet, daß** der Anker sich in einem Raum (8) zwischen dem Einlaßventil (13, 19) und dem Fluideingang (17) bewegen kann, welcher ein mit Fluid befüllbares freies Volumen aufweist, das größer als das Volumen des Verdichtungsraums (16) beim Verschließen des Einlaßventils ist.

11. Einspritzvorrichtung nach Anspruch 10, **dadurch gekennzeichnet, daß** das Volumen des Raums (8) zur Erzeugung eines effizienten Überdrucks möglichst klein ist.

## Claims

1. Injection apparatus (25) for the injection of a reducing agent into an exhaust gas section of an internal combustion engine, having a compression space (16), the volume of which can be varied by way of movement of a piston (2) which has a compression space-side region (21) which faces the compression space (16) and an armature-side region (22) which faces away from the compression space, and having an inlet valve (13, 19) which at least one open position, in which it produces a fluid connection between the compression space (16) and an external fluid source which can be connected to a fluid inlet (17) of the injection apparatus, and at least one closed position, in which it disconnects the fluid connection between the compression space (16) and the external fluid source, a check valve (7) being arranged between the fluid inlet (17) and the armature-side region (22), **characterized in that** the check valve (7) has an elastic closing element (28) which is set up to be deformed elastically during the closure of the fluid inlet (17) as a consequence of a fluid pressure; and **in that**, on the side which faces away from the piston (2), the compression space (16) is delimited by a passive nozzle valve (15) which opens above a sufficiently high fluid pressure in the compression space (16) and allows accumulated fluid to escape into an expansion space (20) which is arranged downstream.

2. Injection apparatus according to Claim 1, **characterized in that** the check valve (7) is set up to open and close the fluid inlet.

3. Injection apparatus according to Claim 1 or 2, **characterized in that** the check valve is configured as a screen valve (27).

4. Injection apparatus according to one of the preceding claims, **characterized in that** a fluid connection (12) between the compression space and the inlet valve (13, 19) is configured on the piston (2).

5. Injection apparatus according to Claim 4, **characterized in that** the fluid connection is formed by way of an edge-side piston cut-out (12) or by way of a piston bore.

6. Injection apparatus according to one of the preceding claims, **characterized in that** the inlet valve (13, 19) is configured by way of the interaction of a region (19) of the injection apparatus with the armature-side region (22) of the piston.

7. Injection apparatus according to Claim 6, **characterized in that** the region (19) is configured as an edge, and **in that** the edge interacts with a groove (13) in the armature-side region (22) of the piston.

8. Injection apparatus according to one of the preceding claims, **characterized in that** an armature (1), in particular an armature plate, is configured on the armature-side region (22) of the piston.

9. Injection apparatus according to Claim 8, **characterized in that** the armature (1) has at least one bore (9) which makes a direct fluid exchange between the fluid inlet (17) and the inlet valve (13, 19) possible.

10. Injection apparatus according to Claim 8 or 9, **characterized in that** the armature can move in a space (8) between the inlet valve (13, 19) and the fluid inlet (17) which has a free volume which can be filled with fluid, which free volume is greater than the volume of the compression space (16) during the closure of the inlet valve.

11. Injection apparatus according to Claim 10, **characterized in that** the volume of the space (8) is as small as possible in order to generate an efficient positive pressure.

## Revendications

1. Dispositif d'injection (25) servant à injecter un agent réducteur dans une ligne de gaz d'échappement d'un moteur à combustion interne, ledit dispositif d'injection comprenant une chambre de compression (16) dont le volume peut varier par déplacement d'un piston (2) qui comporte une zone côté chambre de compression (21), dirigée vers la chambre de compression (16), et une zone côté induit (22), opposée à la chambre de compression, et une soupape d'admission (13, 19), qui au moins une position ouverte, dans laquelle elle établit une liaison fluidique entre la chambre de compression (16) et une source de fluide externe qui peut être raccordée à une entrée de fluide (17) du dispositif d'injection, et au moins une position fermée dans laquelle elle coupe la liaison fluidique entre la chambre de compression (16) et la source de fluide externe, un clapet anti-retour (7) étant disposé entre l'entrée de fluide (17) et la zone côté induit (22), **caractérisé en ce que** le clapet anti-retour (7) comporte un élément de fermeture élastique (28) conçu pour être déformé élastiquement lors de la fermeture de l'entrée de fluide (17) en raison de la pression de fluide ; et **en ce que**, du côté opposé au piston (2) la chambre de compression (16) est délimitée par une soupape d'échappement passive (15) qui s'ouvre à partir d'une pression de fluide suffisamment élevée dans la chambre de compression (16) et qui permet au fluide accumulé de s'échapper dans une chambre de détente (20) .

2. Dispositif d'injection selon la revendication 1, **caractérisé en ce que** le clapet anti-retour (7) est conçu pour ouvrir et fermer l'entrée de fluide.

3. Dispositif d'injection selon la revendication 1 ou 2, **caractérisé en ce que** le clapet anti-retour est réalisé sous la forme d'un clapet de protection (27).

4. Dispositif d'injection selon l'une des revendications précédentes, **caractérisé en ce qu'**une liaison fluidique (12) est réalisée au niveau du piston (2) entre la chambre de compression et la soupape d'admission (13, 19).

5. Dispositif d'injection selon la revendication 4, **caractérisé en ce que** la liaison fluidique est formée par un évidement de piston marginal (12) ou par un alésage de piston.

6. Dispositif d'injection selon l'une des revendications précédentes, **caractérisé en ce que** la soupape d'admission (13, 19) est formée par la coopération d'une zone (19) du dispositif d'injection avec la zone côté induit (22) du piston.

7. Dispositif d'injection selon la revendication 6, **caractérisé en ce que** la zone (19) a la forme d'un bord et **en ce que** le bord coopère avec une gorge (13) dans la zone côté induit (22) du piston.

8. Dispositif d'injection selon l'une des revendications précédentes, **caractérisé en ce qu'**un induit (1), en particulier une plaque d'induit, est formé au niveau de la zone côté induit (22) du piston.

9. Dispositif d'injection selon la revendication 8, **caractérisé en ce que** l'induit (1) comporte au moins un alésage (9) qui permet un échange de fluide direct entre l'entrée de fluide (17) et la soupape d'admission (13, 19).

10. Dispositif d'injection selon la revendication 8 ou 9, **caractérisé en ce que** l'induit peut se déplacer dans une chambre (8) qui est située entre la soupape d'admission (13, 19) et l'entrée de fluide (17) et qui comporte un volume libre, rempli de fluide, qui est plus grand que le volume de la chambre de compression (16) lors de la fermeture de la soupape d'admission.

11. Dispositif d'injection selon la revendication 10, **caractérisé en ce que** le volume de la chambre (8) est le plus faible possible pour générer une surpression efficace.
